# EUROPÄISCHE PATENTSCHRIFT

(11) **EP 2 435 813 B1**
(45) Veröffentlichungstag und Bekanntmachung des Hinweises auf die Patenterteilung: **19.08.2015**
(21) Anmeldenummer: 10705530.3
(22) Anmeldetag: 05.01.2010
(51) Int. Cl.: F41H 7/03, G01N 1/02, G01N 1/08, G01N 1/22, G01N 1/44, G01V 3/15

(54) **SPÜRVORRICHTUNG FÜR BODENSPÜRUNGEN AUS DEM INNEREN EINES FAHRZEUGS SOWIE FAHRZEUG MIT EINER SOLCHEN SPÜRVORRICHTUNG**
SENSING APPARATUS FOR GROUND SENSING FROM THE INSIDE OF A VEHICLE AND VEHICLE COMPRISING SUCH A SENSING APPARATUS
DISPOSITIF DE TRAÇAGE DE MARQUES AU SOL DEPUIS L'INTÉRIEUR D'UN VÉHICULE ET VÉHICULE DOTÉ D'UN TEL DISPOSITIF DE TRAÇAGE

(30) Priorität: 01.04.2009 DE 102009015828
(43) Veröffentlichungstag der Anmeldung: 04.04.2012
(60) Teilanmeldung: 15166438.0
(73) Patentinhaber: Krauss-Maffei Wegmann GmbH & Co. KG, 80997 München (DE)
(72) Erfinder: SCHNEIDER, Lars, 34311 Naumburg (DE); WAGNER, Hartmut, 37308 Reinholterode (DE)
(74) Vertreter: Feder Walter Ebert
(86) Internationale Anmeldenummer: PCT/DE2010/000015
(87) Internationale Veröffentlichungsnummer: WO 2010/111987

(56) Entgegenhaltungen:
- WO-A1-93/24609
- DE-A1- 2 937 535
- DE-A1- 19 913 220
- DE-C1- 3 835 207
- DE-U1- 8 424 372
- DE-U1- 9 100 367
- DE-U1- 29 604 341
- FR-A1- 2 332 531
- US-A- 2 378 440
- US-A- 3 841 973
- US-A- 4 068 523
- US-A- 4 285 485
- US-A- 5 437 203
- US-B1- 6 260 633

## Beschreibung

Die Erfindung betrifft eine Spürvorrichtung für Bodenspürungen aus dem Inneren eines Fahrzeugs mit einer mit dem Boden in Kontakt bringbaren Spürsonde und einer Handhabe zur Bewegung der Spürsonde von einer Ruhestellung in eine abgesenkte Bodenspürstellung sowie ein Fahrzeug mit einer solchen Spürvorrichtung.

Spürvorrichtungen für Bodenspürungen werden bei insbesondere militärischen Spürfahrzeugen eingesetzt, um beispielsweise Schad- und Kampfstoffe im Erdboden und somit in der Umgebung nachweisen zu können. Die Bodenprobe kann hierbei in fester Form mittels eines Greiferarms oder in verdampfter Form aufgenommen und analysiert werden.

Eine bekanntes Spürfahrzeug mit einem zangenartigen Greiferarm beschreibt beispielsweise die DE 91 00 367 U1. Zum Aufnehmen von Bodenproben befindet sich im Heckbereich eine Probennahmevorrichtung, in der verschiedene Geräte wie eine Zange angeordnet sind. Mittels der Zange können die Bodenproben von dem Boden aufgenommen werden und in einem Probennahmebehälter untergebracht werden, welcher dann verschlossen und gefahrlos zu einem Labor transportiert werden kann. Ferner weist das Spürfahrzeug eine Doppelradspüreinrichtung mit einem Massenspektrometer auf. Beim Spüren mit dem bekannten Massenspektrometer ist es erforderlich, während der Fahrt mit Hilfe der Doppelradspüreinrichtung eventuelle Kontaminationen, die sich auf dem Boden abgelagert haben, mit Hilfe eines auf dem Spürrad befindlichen Silikonschlauches zu übertragen und zur Detektion an das Massenspektrometer weiterzuleiten. Ein Doppelradspürgerät zum Feststellen von Kampfstoffen wird auch in der der DE 84 24 372 U1 beschrieben.

Dokumente US3841973 A, US5437203 A, US6260633 B1 und US2378440 A offenbaren auch Spürvorrichtungen für Bodenspürungen.

Weiterhin ist es bei dem militärischen Spürpanzer des Types "Fuchs" bekannt, über eine als Spürlanze ausgestaltete Spürvorrichtung im Heckbereich des Fahrzeugs eine Bodenanalyse vorzunehmen. Hierzu existiert eine manuell bedienbare Spürsonde, die aus dem Inneren des geschützten Fahrzeugs heraus bedienbar ist. Der Spürer hat hier ein langes Rohr, welches durch die heckseitige Fahrzeugwand geführt wird. Über einen kurzen Griff als Handhabe an einem Ende der Spürsonde kann der Spürer die Spürsonde positionieren und die für die Durchführung der Bodenanalyse erforderliche Andruckkraft aufbringen. Am anderen Ende der Spürsonde ist ein Spürkopf angeordnet, welcher ein Heizelement beinhaltet, so dass die Bodenprobe verdampfen kann. Diese Bodendämpfe werden dann durch die rohrförmige Spürlanze in das Innere des Fahrzeugs zu einer Analyseeinrichtung geführt. Nachteilig am Stand der Technik ist, dass aufgrund des langen Rohres eine Bedienung nicht ergonomisch durchführbar ist. Ferner muss eine große Kraft aufgewendet zu werden, um den für die Durchführung der Bodenspürung nötigen Anpressdruck zu erreichen. Auf Grund der Konstruktion muss die Anordnung im geräumigeren Heck erfolgen, wo zudem über einen Glassichtblock in der Heckwand der Spürvorgang beobachtbar ist.

Die Erfindung hat die Aufgabe, eine Spürvorrichtung und ein Fahrzeug mit einer Spürvorrichtung derart auszugestalten, dass eine günstige Bedienbarkeit für den Spürer erreicht wird. Die Erfindung löst die Aufgabe mit den Merkmalen aus dem unabhängigen Anspruch 1. Vorteilhafte Ausgestaltungen sind Bestandteil der abhängigen Ansprüche 2 bis 16.

Bei einer ersten erfindungsgemäßen Ausgestaltung ist die Spürsonde mit der Handhabe derart gekoppelt, dass sich bei Betätigung der Handhabe die Spürsonde unter Hebelwirkung in die Bodenspürstellung absenkt. Durch die Hebelwirkung kann die Krafteinteitung zur Erreichung der nötigen Andruckkraft wesentlich verbessert werden. Bei einer bevorzugten Ausgestaltung ist die Handhabe hierbei wippenförmig ausgestaltet. Hierdurch wird eine einfache Konstruktion der Handhabe zur Erreichung einer Hebelwirkung erreicht. Bevorzugt ist die Handhabe schwenkbeweglich, insbesondere über ein Kugelgelenk, mit der Spürsonde gekoppelt. Hierdurch kann erreicht werden, dass trotz der Hebelwirkung ein nahezu senkrechtes Absenken der Spürsonde erreicht wird. Die Absenkung kann somit unter Hebelkraft erfolgen.

Zur Erreichung einer Hebelwirkung umfasst die Handhabe bevorzugt einen Hebel und ein Hebellager. Bei einer besonders vorteilhaften Ausgestaltung umfasst die Handhabe einen Einhandzughebel, der über das Hebellager gelagert ist. Mittels des Einhandzughebels kann eine ergonomisch günstige Ausgestaltung der Handhabe erreicht werden.

Bei einer bevorzugten Ausgestaltung ist das Hebellager über eine Stützlagervorrichtung mit dem Fahrzeug verbindbar. Die Stützlagervorrichtung kann hierbei derart ausgestaltet sein, dass zum Ausrichten der Spürsonde Schwenkbewegungen der Spürsonde um eine im Wesentlichen horizontale Schwenkebene durchführbar sind. Somit kann die Spürsonde um einen in der Schwenkebene liegenden Schwenkpunkt geschwenkt werden. Bei einer rohr- oder stabförmigen Ausgestaltung der Spürsonde kann die Schwenkebene im Wesentlichen senkrecht zur Rohr- oder Stabachse liegen. Durch diese seitlichen Ausrichtbewegungen kann der Spürer eine für die Bodenspürung geeignete Stelle innerhalb eines Spürbereiches aufsuchen, ohne dass das Fahrzeug Rangierbewegungen durchführen muss.

Insbesondere kann die Stützlagervorrichtung hierzu ein Drehlager mit insbesondere im Wesentlichen vertikaler Drehachse umfassen. Zudem kann die Stützlagervorrichtung eine insbesondere im Wesentlichen horizontale Linearführung umfassen. Durch die Kombination von Drehlager und horizontaler Linearführung lässt sich ein großer Ausrichtbereich für die Spürsonde erreichen.

Bei einer zweiten erfindungsgemäßen Ausgestaltung ist die Spürvorrichtung derart ausgestaltet, dass die Absenkbewegung der Spürsonde mittels einer Absenkarretierung arretierbar ist. Durch die Absenkarretierung ergibt sich eine günstige Bedienbarkeit für den Spürer, da verschiedene Absenkstellungen definiert festsetzbar sind. Die Absenkarretierung kann hierbei ein Lochblende umfassen, in die ein mit der Handhabe verbundener Bolzen, der relativ zur Lochblende bewegbar ist, zur Arretierung eingreift.

Bevorzugt ist die Absenkarretierung mittels einer an der Handhabe angeordneten Absenkfreigabebetätigung freigebbar. Hierdurch kann die Einhandbedienung der Spürvorrichtung unterstützt werden. Bevorzugt ist die Spürsonde in der Ruhestellung und/oder in der Bodenspürstellung arretierbar.

Ferner kann die Spürsonde zwischen der Ruhestellung und der Bodenspürstellung auch in einer Luftspürstellung und/oder einer Kopfwechselstellung arretierbar sein. Bei einer Luftspürstellung ist der Spürkopf nicht mit dem Boden in Kontakt. Es wird über den Spürkopf eine Probe der Umgebungsluft entnommen und in das Fahrzeug zu einer Analyseeinrichtung geleitet. In der Kopfwechselstellung ist der Spürkopf ebenfalls nicht mit dem Boden in Kontakt. Sie lässt allerdings ein einfaches Auswechseln zu, welches beispielsweise dann erforderlich ist, wenn eine Kontaminierung festgestellt worden ist.

Durch die definierten arretierten Positionen der Spürsonde kann zudem ein Sensor Einsatz finden, welcher die Ruhestellung, die Bodenspürstellung, die Luftspürstellung und/oder die Kopfwechselstellung sensiert. Eine einfache Ausgestaltung kann sich ergeben, wenn der Sensor unmittelbar an der Absenkarretierung angeordnet ist und so die einzelnen arretierten Positionen sensiert. Durch die Sensierung können dem Spürer und auch einem Fahrer des Spürfahrzeuges verschiedene Stellungen der Spürsonde angezeigt werden. Zudem kann beispielsweise mittels einer Steuereinrichtung verhindert werden, dass das Fahrzeug losfährt, wenn sich die Spürsonde in der Bodenstellung befindet, so dass eine Unfall- und Beschädigungsgefahr verringert wird.

Bei einer dritten erfindungsgemäßen Ausgestaltung ist die Spürvorrichtung derart ausgestaltet, dass mittels der Handhabe die Spürsonde zum Ausrichten in eine im Wesentlichen horizontale Schwenkebene schwenkbar ist, wobei mittels einer Ausrichtarretierung die Ausrichtung arretierbar ist. Somit kann die Spürsonde um einen in der Schwenkebene liegenden Schwenkpunkt, insbesondere kugelgelenkig geschwenkt werden. Bei einer rohr- oder stabförmigen Ausgestaltung der Spürsonde kann die Schwenkebene im Wesentlichen senkrecht zur Rohr- oder Stabachse liegen. Die Vorteile einer ausrichtbaren Spürsonde wurden bereits beschrieben.

Über die Ausrichtarretierung kann die Ausrichtung arretiert werden, so dass nach einmal erfolgter Ausrichtung mittels der Ausrichtarretierung keine weiteren seitlichen Ausrichtbewegungen zugelassen werden, so dass dann die einmal ausgerichtete Spürsonde lediglich noch in die Bodenspürstellung abgesenkt werden muss.

Bevorzugt ist die Ausrichtarretierung mittels einer an der Handhabe angeordneten Ausricht-Freigabebetätigung freigebbar. Hierdurch wird wiederum die Einhandbedienbarkeit der Spürvorrichtung unterstützt.

Ein erfindungsgemäßes Fahrzeug mit einer bereits beschriebenen Spürvorrichtung ist derart ausgestaltet, dass die Spürsonde durch den Fahrzeuginnenboden geführt ist. Dadurch dass die Spürsonde nun nicht mehr durch eine heckseitige Wand des Fahrzeugs geführt ist, ergeben sich geringere Absenkwege. Ferner kann die Ergonomie derart verbessert werden, dass eine nahezu senkrechte Absenkbewegung erreichbar ist. Die Spürsonde kann hierbei über eine Kugeldurchführung mit dem Fahrzeug verbunden sein. Über die Kugeldurchführung werden in Verbindung mit der Kugelgelenklagerung der Spürsonde in der Handhabe die Schwenkbewegungen zum Ausrichten der Spürsonde und axiale Bewegungen zum Absenken und Anheben der Spürsonde zugelassen.

Bevorzugt umfasst die Spürsonde einen Rohrabschnitt, an dessen einem Ende ein Spürkopf angeordnet ist. Ferner kann unterhalb des Fahrzeugs ein Schacht angeordnet sein, durch den die Spürsonde geführt ist. Zudem kann der Spürkopf in der Ruhestellung in dem Schacht, der vorzugsweise verschließbar ist, angeordnet sein, so dass sich eine geschützte Ruhestellung des Spürkopfes ergibt.

Da die Spürvorrichtung insbesondere in militärischen Fahrzeugen eingesetzt wird, die im Regelfalle über einen besonderen Minenschutz verfügen, wird es nicht möglich sein, den unterhalb des Fahrzeugs stattfindenden Bodenspürvorgang aus dem Inneren des Fahrzeugs heraus unmittelbar zu verfolgen. Aus diesem Grund kann unter dem Fahrzeug eine Kamera angeordnet sein, mittels derer der Spürvorgang über ein Anzeigegerät beobachtbar ist.

Bevorzugt umfasst der Spürkopf ein Heizelement zum Verdampfen einer Bodenprobe. Insbesondere sind hierbei die Bodendämpfe durch die Spürsonde, insbesondere durch den Rohrabschnitt in eine Analysevorrichtung im Fahrzeug zuleitbar.

Die ergonomische Ausgestaltung des Fahrzeugs kann ferner dadurch unterstützt werden, dass im Innenraum des Fahrzeugs ein Arbeitsplatz eines Spürers angeordnet ist, wobei die Handhabe im Greifraum des Spürers angeordnet ist. Hierdurch wird vermieden, dass der Spürer zum Bodenspüren seinen Sitz verlassen und sich ins Fahrzeugheck begeben muss. Somit kann die Erfindung auch in Fahrzeugen mit kleinem Fahrzeuginnenraum Einsatz finden.

Bevorzugt ist mittels eines Sensors eine Bodenspürstellung sensierbar, wobei der Sensor mit einer Steuereinrichtung verbunden ist, die bei Sensierung der Bodenspürstellung ein Anfahren des Fahrzeug verhindert.

Sämtliche vorgestellten erfindungsgemäßen Ausgestaltungen können miteinander kombiniert werden.

Eine bevorzugte Ausgestaltung der Erfindung wird anhand der Fig. 1 bis 14 beschrieben. Es zeigen:
- Fig. 1: ein Fahrzeug mit einer Spürvorrichtung in der Ruhestellung im Längsquerschnitt;
- Fig. 2: das Fahrzeug gemäß Fig. 1 mit teilweise transparenten Elementen;
- Fig. 3: das Fahrzeug gemäß Fig. 2 mit der Spürvorrichtung in der Luftspürstellung;
- Fig. 4: das Fahrzeug gemäß Fig. 3 mit der Spürvorrichtung in der Bodenspürstellung;
- Fig. 5: den fahrzeuginnenseitigen Teil der Spürvorrichtung gemäß Fig. 1 in einer perspektivischen Darstellung;
- Fig. 6: der Teil der Spürvorrichtung gemäß Fig. 5 mit teilweise weggelassenen Elementen;
- Fig. 7: den Arbeitsplatz eines Spürers in dem Fahrzeug gemäß Fig. 1 in der Draufsicht;
- Fig. 8: das Fahrzeug gemäß Fig. 4 zur Erläuterung des Ausrichtbereiches;
- Fig. 9: das Fahrzeug gemäß Fig. 8 mit nach hinten ausgerichteter Spürsonde;
- Fig. 10: das Fahrzeug gemäß Fig. 8 mit nach vorne ausgerichteter Spürsonde;
- Fig. 11: eine querseitige Schnittdarstellung des Fahrzeugs gemäß Fig. 1;
- Fig. 12: das Fahrzeug gemäß Fig. 11 zur Erläuterung des Ausrichtbereiches
- Fig. 13: eine vergrößerte Darstellung der Handhabe gemäß Fig. 6; und
- Fig. 14: eine vergrößerte querseitige Schnittdarstellung der Spürvorrichtung nach Fig. 1.

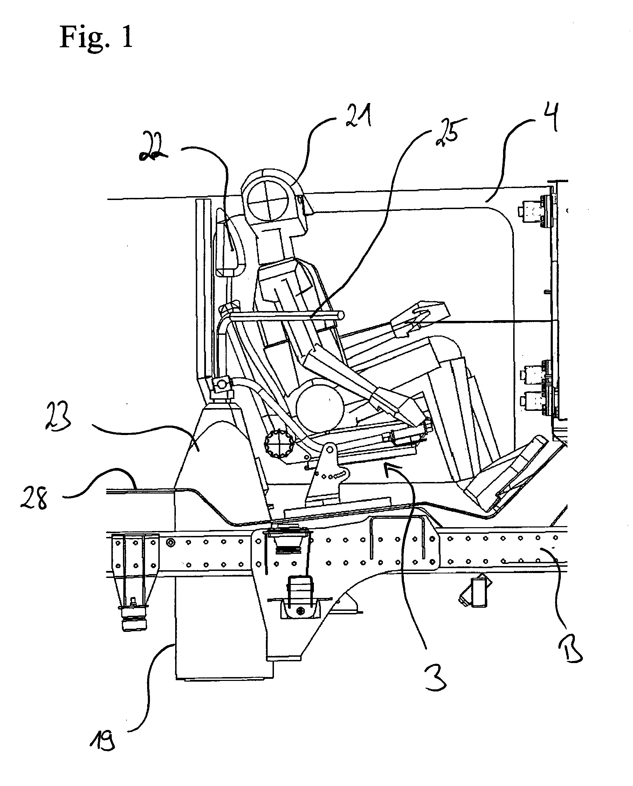

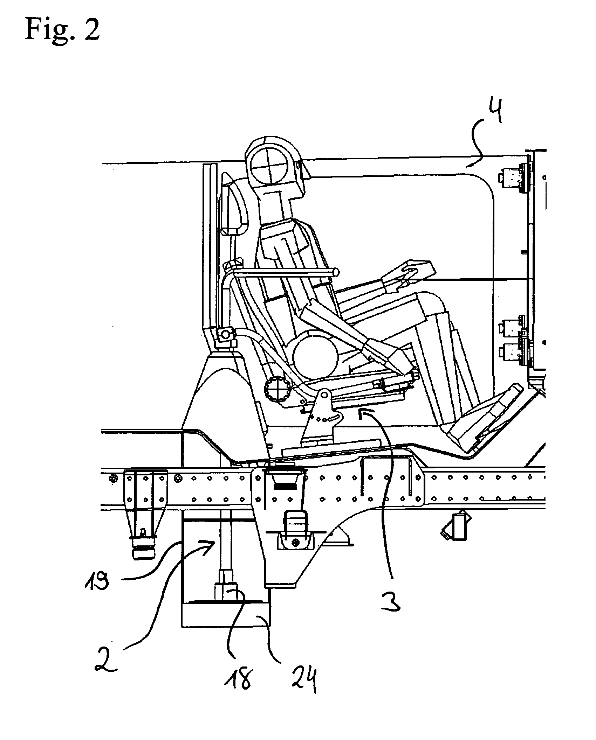

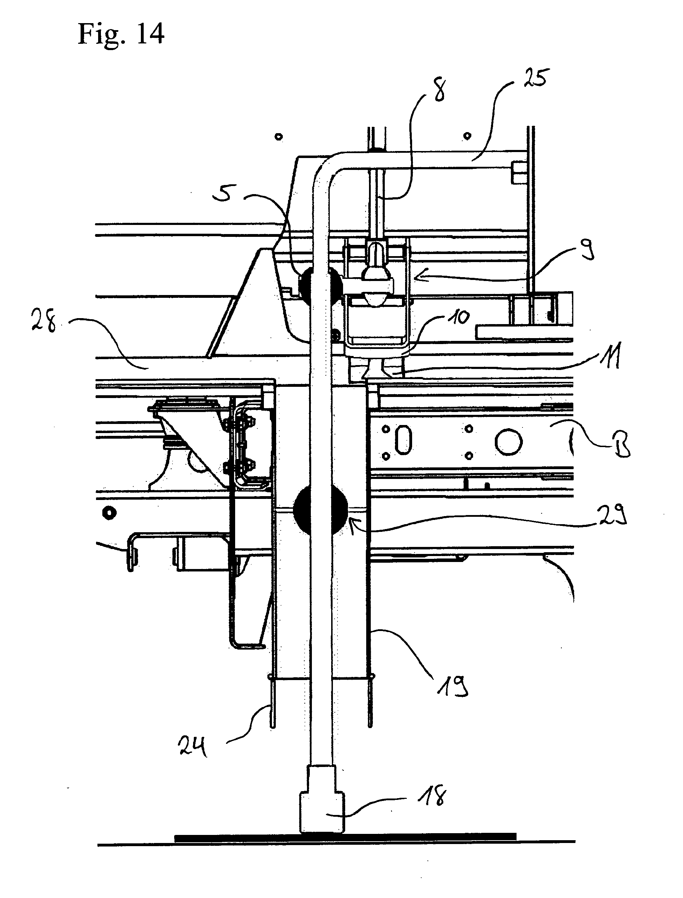

Die Fig. 1 und 2 zeigen ein militärisches Fahrzeug 4, welches als Spürfahrzeug Spüraufgaben übernehmen kann. Hierzu ist ein Arbeitsplatz eines Spürers 21 im Innenraum des Fahrzeugs 4 vorgesehen. Das Fahrzeug 4 verfügt über eine Spürvorrichtung 1, die eine Spürsonde 2 und eine manuell betätigbare Handhabe 3 umfasst. Die Spürsonde 2 weist einen Rohrabschnitt 17 auf, der über eine in Fig. 14 dargestellte Lagerplatte mit Kugeldurchführung 29 durch einen Fahrzeuginnenboden 28 und den Boden B des Fahrzeugs 4 geführt ist.

Gemäß der Fig. 1 und 2 befindet sich die Spürvorrichtung 1 und die Spürsonde 2 in einer Ruhestellung. In der Ruhestellung befindet sich der Spürkopf 18, der an einem Ende des Rohrabschnittes 17 angeordnet ist, gut geschützt vollständig innerhalb des unter dem Fahrzeugboden B befindlichen Schachtes 19, der in Fig. 2 transparent dargestellt ist. Gemäß Fig. 1 ist der Schacht über eine Klappenvorrichtung 24, die manuell oder motorisch betätigbar ist, verschlossen, gemäß Fig. 2 ist die Klappenvorrichtung 24 geöffnet. Die Spürsonde 2 kann zum Zwecke des Minenschutzes eine nicht dargestellte Sollbruchstelle aufweisen.

Der Spürkopf 18 umfasst in nicht dargestellter Weise ein Heizelement zum Verdampfen von Bodenproben. Die Bodenprobendämpfe werden durch den Rohrabschnitt 17 über ein Wellrohr 25 im Inneren des Fahrzeugs 4 zu einer nicht weiter dargestellten Analysevorrichtung gesaugt.

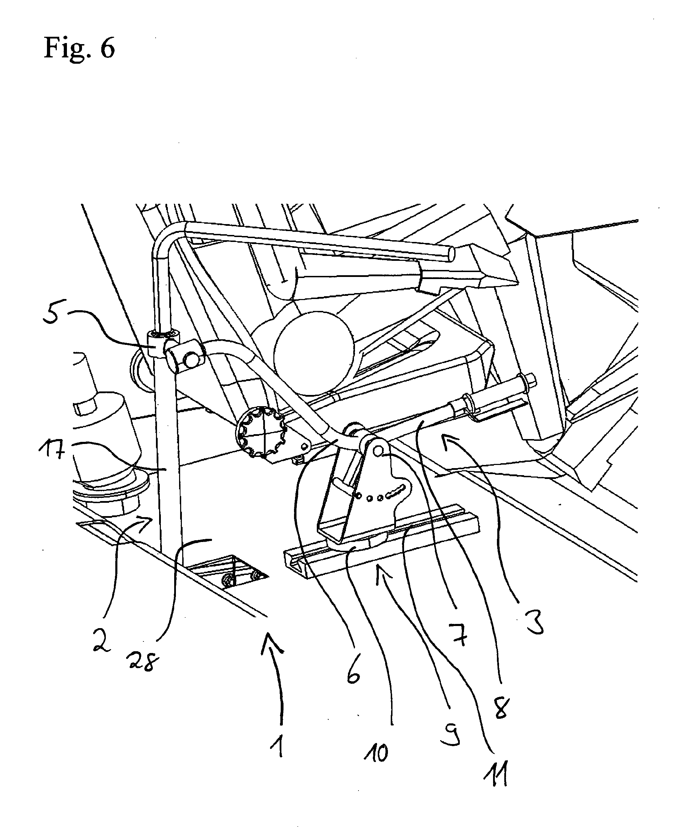

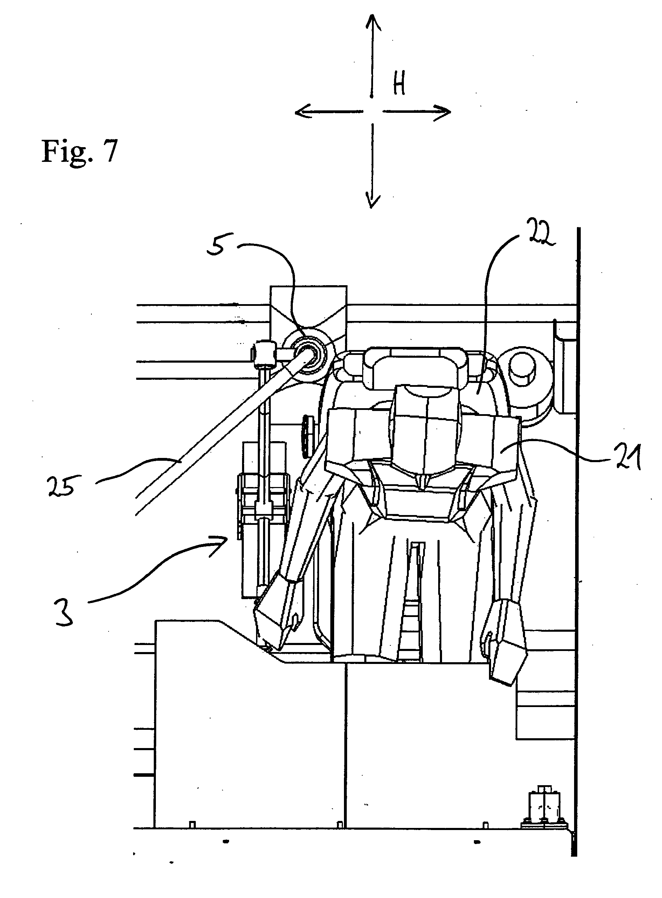

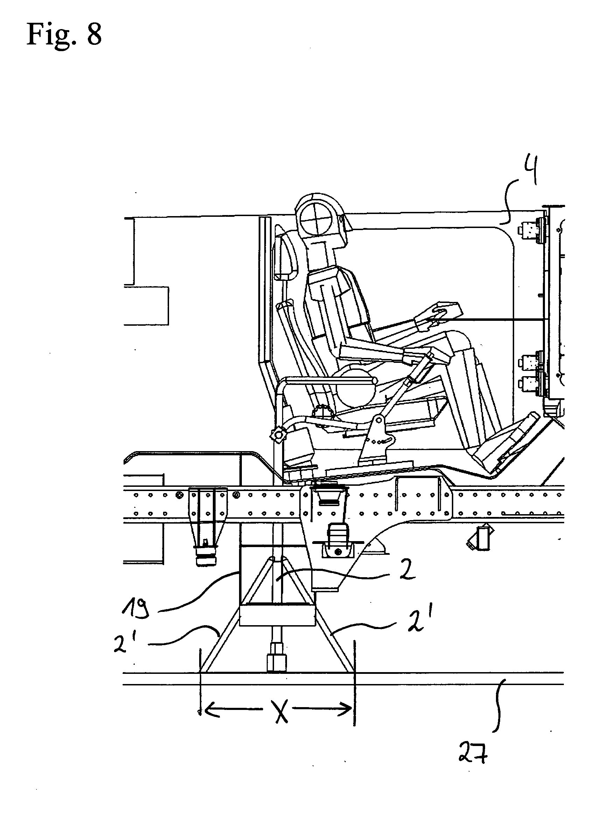

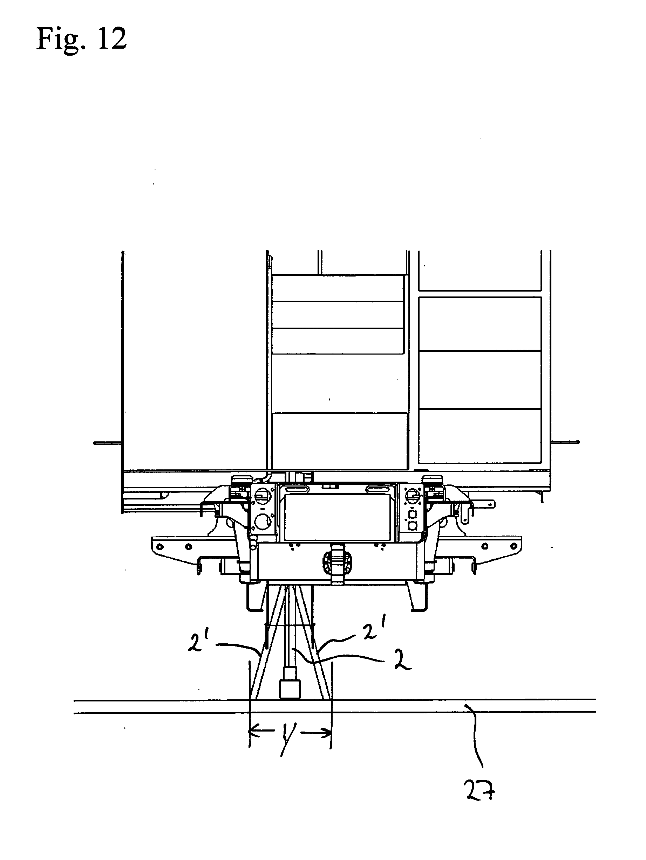

Mittels der Handhabe 3 kann der Spürer 21 die Spürsonde 2 ausrichten und absenken. Hierzu ist die Handhabe 3 wippenförmig ausgestaltet. Sie umfasst gemäß Fig. 6 einen Einhandzughebel 8, der über ein Hebellager 7 und eine Stützlagervorrichtung 9 mit dem Fahrzeuginnenboden 28 verbunden ist. Durch Zug an dem Einhandzughebel 8 senkt sich die Spürsonde 2 nach unten ab. Die Handhabe 3 ist hierbei über ein Kugelgelenk 5 mit Durchführung schwenkbeweglich mit der Spürsonde 2 gekoppelt, so dass die Hebelbewegung der Handhabe 3 in eine im Wesentlichen senkrechte Absenkbewegung überführt wird. Durch das Kugelgelenk 5 kann die Spürsonde 2 um eine im Wesentlichen horizontale Schwenkebene H (Fig. 7) geschwenkt werden, so dass Ausrichtungen X (Fig. 8) und Y (Fig. 12) der Spürsonde 2 und des Spürkopfes 18 erreichbar sind. Das Kugelgelenk 5 stellt somit den in der horizontalen Ebene H liegenden Schwenkpunkt dar.

Das Hebellager 7 ist als Lagerbock ausgestaltet und umfasst eine im Wesentlichen horizontale Drehachse. Das Hebellager 7 wiederum ist über eine Stützlagervorrichtung 9 mit dem Fahrzeuginnenboden 28 verbunden. Die Stützlagervorrichtung 9 umfasst hierbei zum einen ein Drehlager 10 mit einer im Wesentlichen senkrecht zum Fahrzeuginnenboden 28 und somit im Wesentlichen vertikal verlaufenden Drehachse. Über das Drehlager 10 können Schwenkbewegungen der Handhabe 3 durchgeführt werden, so dass eine Ausrichtbewegung der Spürlanze 2 insbesondere in seitlicher Richtung möglich wird. Die Stützlagervorrichtung 9 umfasst ferner eine Linearführung 11, durch die eine im Wesentlichen parallel zum Fahrzeuginnenboden 28 und somit im Wesentlichen horizontal verlaufende Linearbewegung der Handhabe 3 ausgeführt werden kann, wodurch eine Ausrichtbewegung der Spürsonde 2 in Längsrichtung des Fahrzeugs erreicht wird. Über die Stützlagervorrichtung 9 sind somit ausrichtende Schwenkbewegungen der Spürsonde 2 um eine im Wesentlichen parallel zum Fahrzeuginnenboden 28 und somit im Wesentlichen horizontal verlaufende Schwenkebene mittels der Handhabe 3 durchführbar.

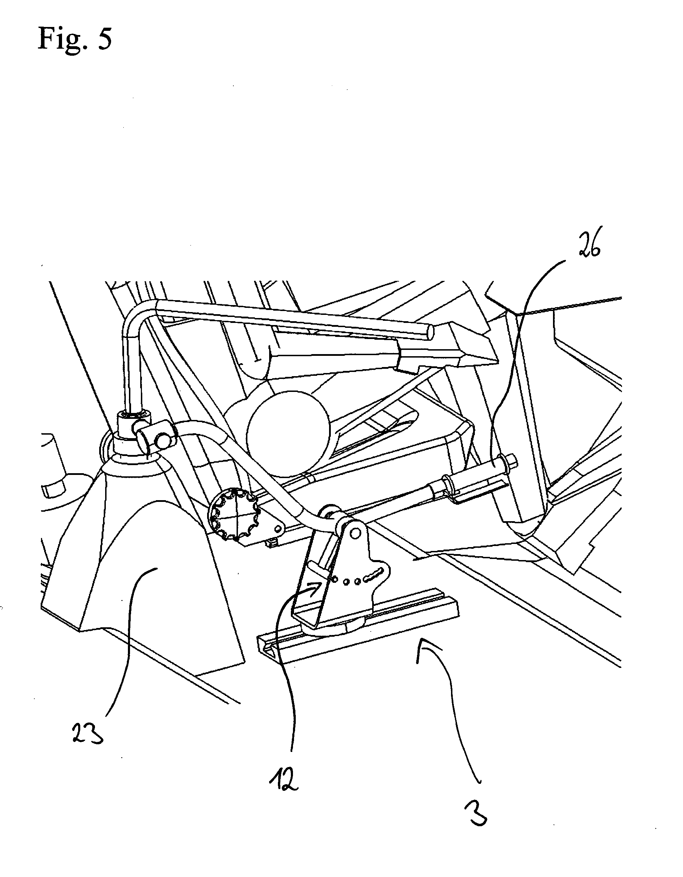

Um zu vermeiden, dass möglicherweise kontaminierte Umgebungsluft in den Fahrzeuginnenraum gelangt, ist die Durchführung der Spürsonde 2 gemäß Fig. 5 durch den Fahrzeuginnenboden 28 und den Boden B über einen Gummibalg 23 abgedichtet, der derart flexibel ausgestaltet ist, dass er Ausricht- und Absenkbewegungen der Spürsonde 2 zulässt.

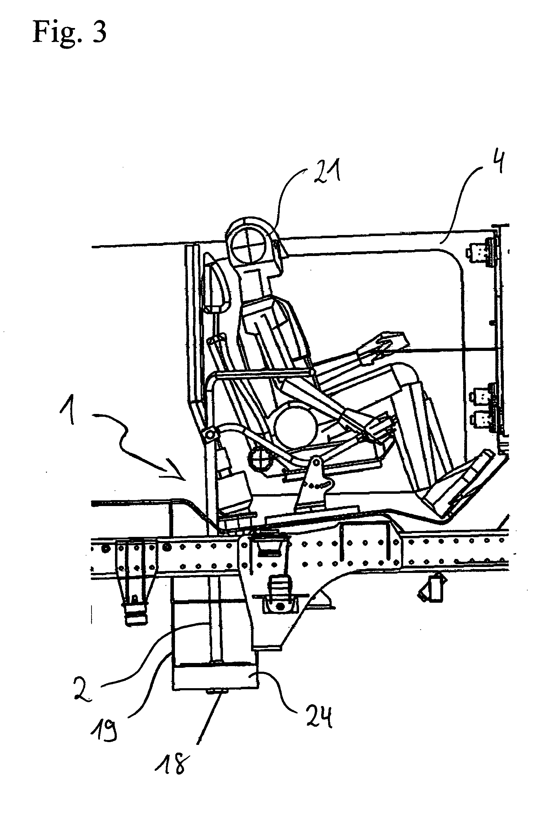

Die Fig. 3 zeigt die Spürvorrichtung 1 mit der Spürsonde 2 in einer Luftspürstellung. Diese wird eingenommen, wenn Proben der Umgebungsluft zur Analyse eingenommen werden sollen. In der Luftspürstellung schaut der Spürkopf 18 bei geöffneten Klappen 24 nur so viel wie nötig aus dem Schacht 19 heraus, so dass die Bodenfreiheit des Fahrzeugs nicht unnötig verringert wird. Somit kann die Luftspürung auch beim Fahren des Fahrzeugs 4 durchgeführt werden.

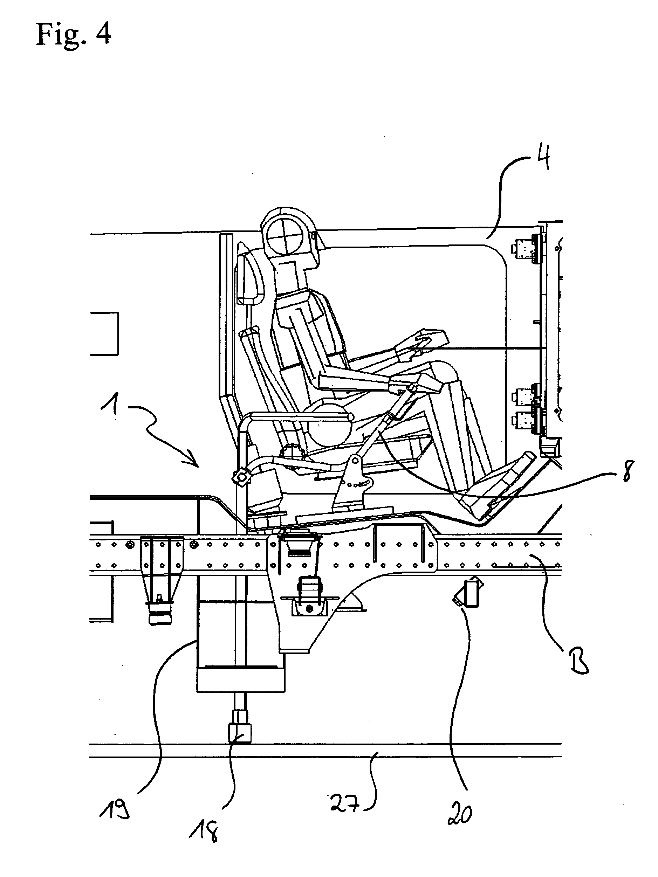

Die Fig. 4 zeigt die Spürvorrichtung 1 in der Bodenspürstellung. Hierzu wird die Spürsonde 2 durch Zug an dem Einhandzughebel 8 unter Hebelwirkung gegen den Erdboden 27 gepresst, so dass eine Bodenprobe verdampfen und eingesaugt werden kann.

Die Fig. 7 zeigt den Arbeitsraum des Spürers 21 in einer Draufsicht. Die Handhabe 3 liegt neben dem Sitz 22 des Spürers in dessen Greifraum. Die Anordnung der Handhabe neben dem Sitz 22 ist somit vergleichbar einer Anordnung, wie sie bei Feststellbremsen (Handbremse) bei Personenkraftwagen bekannt ist.

Die Fig. 8 zeigt den schematisch dargestellten erreichbaren Ausrichtbereich X der Spürsonde 2 in Längsrichtung des Fahrzeugs 4, wobei die maximal erreichbaren Stellungen der Spürsonde 2' dargestellt sind.

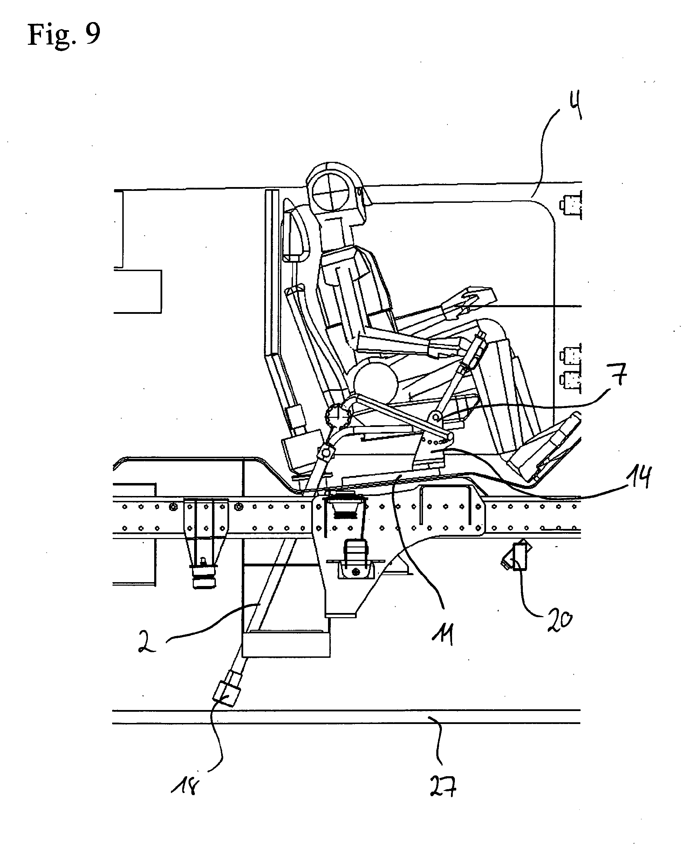

Die Fig. 9 zeigt das Fahrzeug 4 in einer Stellung der Spürvorrichtung 1, in der die Spürsonde 2 nach hinten hin ausgerichtet ist. Hierzu ist das Hebellager 7 mit dem Lagerbock umfassend die Lochblende 14 auf der Linearführung 11 bis zu einem Anschlag nach vorne hin verschoben worden.

Unter dem Fahrzeug ist eine Kamera 20 angeordnet, mittels derer der Ausrichtvorgang und der anschließende Spürvorgang über einen nicht weiter dargestellten Monitor im Inneren des Fahrzeug 4 beobachtbar ist.

In nicht dargestellter Weise ist der Spürkopf 18 an der Spürsonde 2 über ein Knickgelenk verbunden, da der Spürkopf 18 bei der Bodenspürung notwendigerweise senkrecht zum Boden stehen muss. Das Knickgelenk kann hierbei federbelastet ausgestaltet sein. Der Spürer 21 muss durch Aufbringung eines entsprechend hohen Anpressdruckes gewährleisten, dass tatsächlich eine senkrechte Stellung des Spürkopfes am Erdboden 27 erreicht ist.

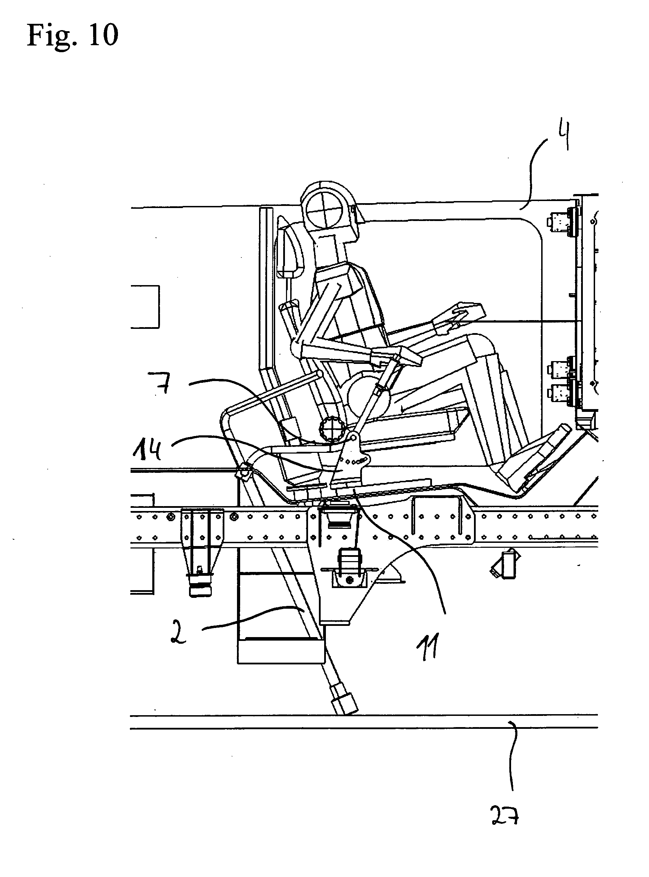

Die Fig. 10 zeigt die entsprechende Stellung mit nach vorne hin ausgerichteter Spürsonde 2. Hierzu ist das Hebellager 7 mit dem Lagerbock umfassend die Lochblende 14 auf der Linearführung 11 bis zu einem Anschlag nach hinten hin verschoben worden.

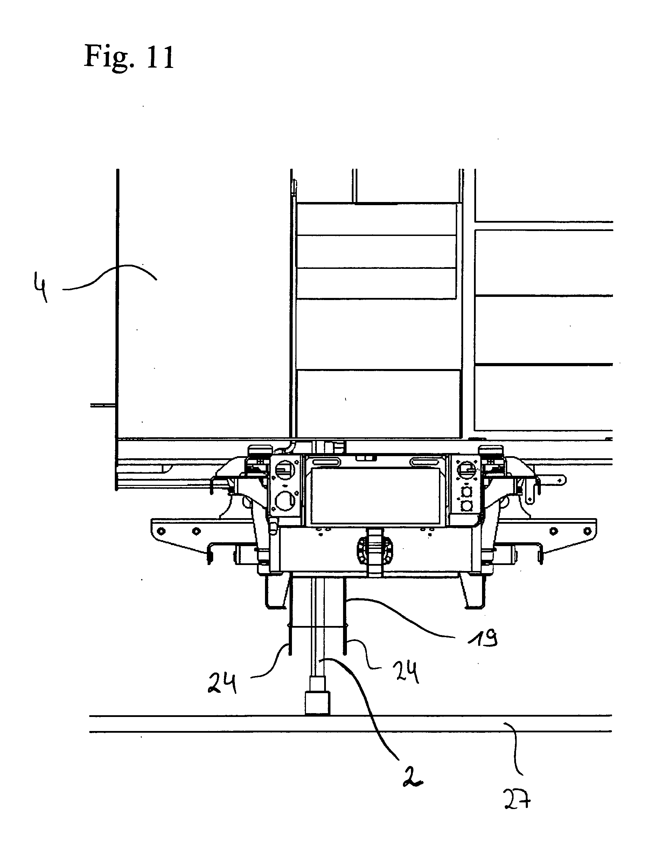

Die Fig. 11 zeigt das Fahrzeug 4 in einer rückseitigen Ansicht mit geöffneten Verschlussklappen 24 und der Spürsonde 2 in der Bodenspürstellung.

Die Fig. 12 zeigt den seitlichen Ausrichtbereich Y der Spürsonde 2, wobei die maximal erreichbaren Stellungen der Spürsonde 2' dargestellt sind. Insgesamt ergibt sich ein von dem Spürkopf abtastbarer Bodenbereich (X, Y) von ca. 1 m².

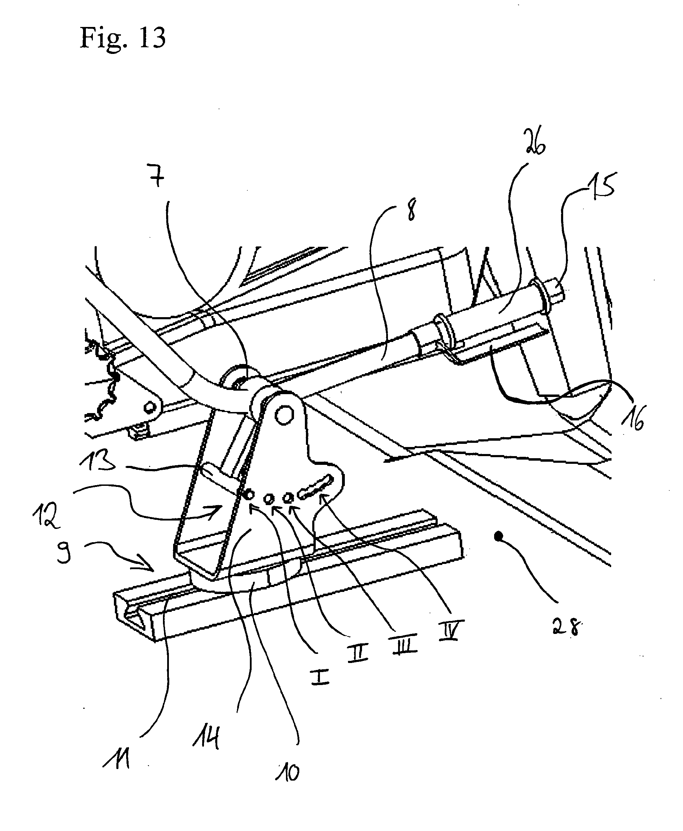

Die Fig. 13 zeigt eine vergrößerte Darstellung der Handhabe 3, bei der im Bereich des Hebellagers 7 eine Absenkarretierung 12 vorgesehen ist. Das Hebellager 7, welches als gabelförmige Lochplattenvorrichtung 14 ausgestaltet ist, wirkt zur Arretierung mit einem Bolzen 13 zusammen, der in verschiedene Ausnehmungen der Lochplatte 14 eingreifen kann. Der Bolzen 13 kann über einen Bowdenzug und die Absenkfreigabebetätigung 15, welche als Druckknopf für den Daumen ausgestaltet ist, freigegeben werden.

Die verschiedenen Löcher der Lochplatte 14 sind verschiedenen vorgegebenen Stellungen der Spürsonde 2 zugeordnet. Die Ausnehmung I stellt hierbei die Ruhestellung dar. Die Ausnehmung II stellt die Luftspürstellung dar. Die Ausnehmung III stellt die Kopfwechselstellung dar, die zwischen der Luftspürstellung und der Bodenspürstellung liegt. Das gekerbte Langloch IV stellt den Schwenkbereich für die Bodenspürstellung dar und dient zum Höhenausgleich. Über eine feine Teilung der Kerben kann mittels des Bolzens 13, der an den Enden wie eine Sperrklinke ausgeführt ist und in die Kerben des Langlochs eingreift, eine bestimmte Bodenspürstellung arretiert werden. In nicht dargestellter Weise könnte alternativ über eine Reibpaarung auch die Bodenspürstellung stufenlos arretiert werden. In beiden Ausführungen kann der Spürer 21 während des Spürvorgangs die Handhabe 3 loslassen.

In nicht dargestellter Weise kann an dem Bolzen 13 oder an der Lochplatte 14 eine Sensorik angeordnet sein, die den Eingriff des Bolzens 13 und dadurch die Stellung der Spürsonde 2 sensiert, so dass eine Signalerzeugung in Abhängigkeit vom Sondenstatus stattfindet. Die entsprechenden Signale können dem Spürer oder dem Fahrer des Fahrzeugs 4 beispielsweise optisch oder akustisch mitgeteilt werden. Zudem kann über eine nicht dargestellte Steuereinrichtung eine Fahrverblockung vorgesehen werden, die ein Anfahren verhindert, wenn sich die Spürvorrichtung in der Bodenspürstellung befindet.

Die Handhabe 3 weist zudem eine nicht weiter dargestellte Ausrichtarretierung auf. Die Ausrichtarretierung kann über die Ausrichtfreigabebetätigung 16, welche als Zughebel ausgestaltet ist, gelöst werden. Bei gelöster Ausrichtfreigabebetätigung sind eine Drehbewegung des Drehlagers 10 sowie eine Linearbewegung der horizontalen Linearführung 11 möglich. Bei unbetätigter Ausrichtfreigabebetätigung ist eine Ausrichtbewegung gesperrt, eine Drehbewegung des Drehlagers 10 sowie eine Linearbewegung über die Linearführung 11 sind nicht möglich.

Die Ausrichtfreigabebetätigung 16 und die Absenkfreigabebetätigung 15 sind im Bereich des Griffes 26 des Einhandzughebels 8 angeordnet, so dass die gesamte Handhabe 3 , die im Greifraum des Spürers 21 neben dessen Sitz 22 angeordnet ist, mit nur einer Hand ergonomisch günstig bedienbar ist.

### Bezugszeichenliste:

- 1: Spürvorrichtung
- 2: Spürsonde
- 3: Handhabe
- 4: Fahrzeug
- 5: Kugelgelenk
- 6: Drehlager
- 7: Hebellager
- 8: Hebel
- 9: Stützlagervorrichtung
- 10: Drehlager
- 11: Linearführung
- 12: Absenkarretierung
- 13: Bolzen
- 14: Lochplatte
- 15: Absenkfreigabebetätigung
- 16: Ausrichtfreigabebetätigung
- 17: Rohrabschnitt
- 18: Spürkopf
- 19: Schacht
- 20: Kamera
- 21: Spürer
- 22: Sitz
- 23: Gummibalg
- 24: Klappe
- 25: Wellrohr
- 26: Griff
- 27: Erdboden
- 28: Fahrzeuginnenboden
- 29: Lagerplatte mit Kugeldurchführung
- I: Ruhestellung
- II: Luftspürstellung
- III: Kopfwechselstellung
- IV: Bodenspürstellungen

- B: Fahrzeugboden
- H: horizontale Schwenkebene
- X: Ausrichtbereich in Längsrichtung des Fahrzeugs
- Y: Ausrichtbereich in Querrichtung des Fahrzeugs

## Patentansprüche

1. Spürvorrichtung (1) für Bodenspürungen aus dem Inneren eines Fahrzeugs (4), mit einer mit dem Boden in Kontakt bringbaren Spürsonde (2) und einer Handhabe (3) zum Bewegen der Spürsonde (2) von einer Ruhestellung in eine abgesenkte Bodenspürstellung, wobei die Handhabe (3) einen Hebel (6, 8) und ein eine horizontale Drehachse umfassendes Hebellager (7) umfasst, wobei der Hebel (6, 8) über das Hebellager (7) mit dem Fahrzeuginnenboden koppelbar ist, **dadurch gekennzeichnet, dass** die den Hebel (6, 8) und das Hebellager (7) umfassende Handhabe (3) wippenförmig ausgestaltet ist und die Spürsonde (2) mit der wippenförmig ausgestalteten Handhabe (3) derart gekoppelt ist, dass sich bei Betätigung der Handhabe (3) die Spürsonde (2) unter Hebelwirkung in die Bodenspürstellung absenkt.

2. Spürvorrichtung (1) nach Anspruch 1, **dadurch gekennzeichnet, dass** die Handhabe (3) schwenkbeweglich, insbesondere über ein Kugelgelenk (5), mit der Spürsonde (2) gekoppelt ist.

3. Spürvorrichtung (1) nach einem der vorhergehenden Ansprüche, **dadurch gekennzeichnet, dass** der Hebel (6, 8) ein Einhand-Zughebel ist.

4. Spürvorrichtung (1) nach Anspruch 3, **dadurch gekennzeichnet, dass** das Hebellager (7) über eine Stützlagervorrichtung (9) mit dem Fahrzeug verbindbar ist, wobei die Stützlagervorrichtung insbesondere derart ausgestaltet ist, dass zum Ausrichten der Spürsonde (2) Schwenkbewegungen der Spürsonde (2) um eine im Wesentlichen horizontale Schwenkebene durchführbar sind.

5. Spürvorrichtung (1) nach einem der vorhergehenden Ansprüche,
**dadurch gekennzeichnet,**
**dass** die Absenkbewegung der Spürsonde (2) mittels einer Absenkarretierung (12) arretierbar ist.

6. Spürvorrichtung (1) nach Anspruch 5, **dadurch gekennzeichnet, dass** die Absenkarretierung (12) eine Lochblende (14) umfasst, in die ein mit der Handhabe (3) verbundener Bolzen (13) zur Arretierung eingreift.

7. Spürvorrichtung (1) nach einem der vorhergehenden Ansprüche, **dadurch gekennzeichnet, dass** die Spürsonde (2) in der Ruhestellung und/oder in der Bodenspürstellung und/oder in einer Luftspürstellung und/oder einer Kopfwechselstellung zwischen der Ruhestellung und der Bodenspürstellung arretierbar ist.

8. Spürvorrichtung (1) nach einem der vorhergehenden Ansprüche, **dadurch gekennzeichnet, dass** die Ruhestellung und/oder die Bodenspürstellung und/oder die Luftspürstellung und/oder die Kopfwechselstellung mittels eines Sensors sensierbar sind, der insbesondere an der Absenkarretierung (12) angeordnet ist.

9. Spürvorrichtung (1) nach einem der vorhergehenden Ansprüche,
**dadurch gekennzeichnet,**
**dass** mittels der Handhabe (3) die Spürsonde (2) zum Ausrichten um eine im Wesentlichen horizontale Schwenkebene schwenkbar ist, wobei mittels einer Ausrichtarretierung die Ausrichtung arretierbar ist.

10. Spürvorrichtung nach Anspruch 9, **dadurch gekennzeichnet, dass** die Ausrichtarretierung mittels einer an der Handhabe (3) angeordneten Ausrichtfreigabebetätigung (16) freigebbar ist.

11. Fahrzeug mit einer Spürvorrichtung nach einem der vorhergehenden Ansprüche, nach einem der vorhergehenden Ansprüche,
**dadurch gekennzeichnet,**
**dass** die Spürsonde (2) durch den Boden (28) des Fahrzeuginnenraums geführt ist.

12. Fahrzeug nach einem der vorhergehenden Ansprüche, **dadurch gekennzeichnet, dass** die Spürsonde (2) über eine Kugeldurchführung (29) mit dem Fahrzeug (4) verbunden ist.

13. Fahrzeug nach einem der vorhergehenden Ansprüche, **dadurch gekennzeichnet, dass** die Spürsonde (2) einen Rohrabschnitt (17) umfasst, an dessen einen Ende ein Spürkopf (18) angeordnet ist.

14. Fahrzeug nach einem der vorhergehenden Ansprüche, **dadurch gekennzeichnet, dass** der Spürkopf (18) ein Heizelement zum Verdampfen einer Bodenprobe enthält, wobei insbesondere die Bodenprobendämpfe durch die Spürsonde in eine Analysevorrichtung im Fahrzeug zuleitbar sind.

15. Fahrzeug nach einem der vorhergehenden Ansprüche, **dadurch gekennzeichnet, dass** im Innenraum des Fahrzeugs (4) ein Arbeitsplatz eines Spürers (21) angeordnet ist, wobei die Handhabe (3) im Greifraum des Spürers (21) angeordnet ist.

16. Fahrzeug nach einem der vorhergehenden Ansprüche, **dadurch gekennzeichnet, dass** mittels eines Sensors eine Bodenspürstellung sensierbar ist, wobei der Sensor mit einer Steuereinrichtung verbunden ist, die bei Sensierung der Bodenspürstellung ein Anfahren des Fahrzeug (4) verhindert.

## Claims

1. Tracking device (1) for ground tracking purposes from the interior of a motor vehicle (4) with a tracking probe (2) that can be brought into contact with the ground and a handle (3) enabling the tracking probe (2) to be moved from a position of rest into a lowered ground tracking position, whereby the handle (3) comprises a lever (6, 8) and a lever bearing (7) with a horizontal axis of rotation, whereby the lever (6, 8) can be connected through the lever bearing (7) to the interior floor of the vehicle, **characterised in that** the handle (3) comprising the lever (6, 8) and the lever bearing (7) is in the form of a rocker system and the tracking probe (2) is connected to the rocker-shaped handle (3) in such a way that when the handle (3) is activated, the tracking probe (2) can be lowered into the ground tracking position.

2. Tracking device (1) according to Claim 1 above, **characterised in that** the handle (3) can be connected in a swivelling manner, in particular by a ball and socket joint (5), to the tracking probe (2).

3. Tracking device (1) according to either of the above two claims, **characterised in that** the lever (6, 8) is a single-handed pulling lever.

4. Tracking device (1) according to Claim 3 above, **characterised in that** the lever bearing (7) can be connected by means of a supporting bearing structure (9) to the vehicle, whereby the supporting bearing structure is so designed that, in order to align the tracking probe (2), the tracking probe (2) can be made to swivel around an essentially horizontal swivelling plane.

5. Tracking device (1) according to any of the above claims, **characterised in that** the lowering movement of the tracking probe (2) can be arrested by a lowering arrester device (12).

6. Tracking device (1) according to Claim 5 above, **characterised in that** the lowering arrester device (12) comprises a perforated plate (14), into which a bolt (13) connected to the handle (3) can engage for the purpose of arresting.

7. Tracking device (1) according to any of the above claims, **characterised in that** the tracking probe (2) can be arrested in its position of rest and/or in its ground tracking position and/or in an air tracking position and/or a head change position between the position of rest and the ground tracking position.

8. Tracking device (1) according to any of the above claims, **characterised in that** the position of rest and/or the ground tracking position and/or the air tracking position and/or the head change position can be sensed by means of a sensor, which is arranged in particular on the lowering arrester device (12).

9. Tracking device (1) according to any of the above claims, **characterised in that**, by means of the handle (3), to be aligned the tracking probe (2) can be swivelled in an essentially horizontal swivelling plane, whereby by means of an alignment arrester device the alignment can be arrested.

10. Tracking device (1) according to Claim 9 above, **characterised in that** the alignment arresting operation can be released by means of a alignment release mechanism (16) arranged on the handle (3).

11. Vehicle containing a tracking device (1) according to any of the above claims, **characterised in that** the tracking probe (2) passes through the floor (28) of the vehicle interior.

12. Vehicle according to any of the above claims, **characterised in that** the tracking probe (2) is connected to the vehicle (4) by means of a ball passageway (29).

13. Vehicle according to any of the above claims, **characterised in that** the tracking probe (2) encompasses a pipe section (17), at the end of which a tracking head (18) is located.

14. Vehicle according to any of the above claims, **characterised in that** the tracking head (18) comprises a heating element to evaporate a ground sample, whereby in particular the ground sample vapours can be conveyed through the tracking probe (2) into an analysis system in the vehicle.

15. Vehicle according to any of the above claims, **characterised in that** inside the vehicle (4) there is a workplace for an analyst (21), whereby the handle (3) is within easy reach of the analyst (21).

16. Vehicle according to any of the above claims, **characterised in that** by means of a sensor a ground tracking position can be sensed, whereby the sensor is connected to a control device, which prevents the vehicle from being operated while ground sensing is being carried out.

## Revendications

1. Dispositif de détection (1) pour des détections au sol depuis l'intérieur d'un véhicule (4), avec une sonde de détection (2) pouvant être amenée en contact avec le sol et une manette (3) pour le déplacement de la sonde de détection (2) d'une position de repos à une position de détection au sol abaissée,
lequel manette (3) comportant un levier (6, 8) et un palier de levier (7) comprenant un axe de rotation horizontal, le levier (6, 8) pouvant être couplé par le palier de levier (7) au plancher de l'espace intérieur du véhicule, **caractérisé en ce que** la manette (3) comprenant le levier (6, 8) et le palier de levier (7) est réalisée sous la forme d'une bascule et la sonde de détection (2) est couplée à la manette (3) réalisée sous la forme d'une bascule de telle manière que lors de l'actionnement de la manette (3), la sonde de détection (2) s'abaisse sous l'action du levier dans la position de détection au sol.

2. Dispositif de détection (1) selon la revendication 1, **caractérisé en ce que** la manette (3) est couplée de manière mobile en pivotement, en particulier par une articulation sphérique (5) à la sonde de détection (2).

3. Dispositif de détection (1) selon l'une quelconque des revendications précédentes, **caractérisé en ce que** le levier (6, 8) est un levier de traction à une main.

4. Dispositif de détection (1) selon la revendication 3, **caractérisé en ce que** le palier de levier (7) peut être relié au véhicule par un dispositif de palier d'appui (9), le dispositif de palier d'appui étant configuré en particulier de telle manière que des mouvements pivotants de la sonde de détection (2) autour d'un plan de pivotement sensiblement horizontal puissent être réalisés pour l'orientation de la sonde de détection (2).

5. Dispositif de détection (1) selon l'une quelconque des revendications précédentes, **caractérisé en ce que** le mouvement d'abaissement de la sonde de détection (2) peut être arrêté à l'aide d'un dispositif d'arrêt d'abaissement (12).

6. Dispositif de détection (1) selon la revendication 5, **caractérisé en ce que** le dispositif d'arrêt d'abaissement (12) comporte un panneau perforé (14), dans lequel un boulon (13) relié à la manette (3) s'engage pour l'arrêt.

7. Dispositif de détection (1) selon l'une quelconque des revendications précédentes, **caractérisé en ce que** la sonde de détection (2) peut être arrêtée dans la position de repos et/ou dans la position de détection au sol et/ou dans une position de détection dans l'air et/ou dans une position de changement de tête entre la position de repos et la position de détection au sol.

8. Dispositif de détection (1) selon l'une quelconque des revendications précédentes, **caractérisé en ce que** la position de repos et/ou la position de détection au sol et/ou la position de détection dans l'air et/ou la position de changement de tête peuvent être détectées à l'aide d'un capteur qui est agencé en particulier au dispositif d'arrêt d'abaissement (12).

9. Dispositif de détection (1) selon l'une quelconque des revendications précédentes, **caractérisé en ce que** la sonde de détection (2) peut être pivotée pour l'orientation autour d'un plan de pivotement sensiblement horizontal à l'aide de la manette (3), l'orientation pouvant être arrêtée à l'aide d'un dispositif d'arrêt d'orientation.

10. Dispositif de détection (1) selon la revendication 9, **caractérisé en ce que** le dispositif d'arrêt d'orientation peut être libéré à l'aide d'un actionnement de libération d'orientation (16) agencé sur la manette (3).

11. Véhicule avec un dispositif de détection (1) selon l'une quelconque des revendications précédentes, **caractérisé en ce que** la sonde de détection (2) est guidée au travers du plancher de l'espace intérieur de véhicule.

12. Véhicule selon l'une quelconque des revendications précédentes, **caractérisé en ce que** la sonde de détection (2) est reliée par un passage sphérique (29) au véhicule (4).

13. Véhicule selon l'une quelconque des revendications précédentes, **caractérisé en ce que** la sonde de détection (2) comporte une section tubulaire (17), sur une extrémité de laquelle est agencée une tête de détection (18).

14. Véhicule selon l'une quelconque des revendications précédentes, **caractérisé en ce que** la tête de détection (18) contient un élément de chauffage pour la vaporisation d'un échantillon de sol, dans lequel en particulier les vapeurs d'échantillon de sol peuvent être amenées par la sonde de détection dans un dispositif d'analyse dans le véhicule.

15. Véhicule selon l'une quelconque des revendications précédentes, **caractérisé en ce qu'**un poste de travail d'un détecteur (21) est agencé dans l'espace intérieur du véhicule (4), la manette (3) étant agencée dans la zone de préhension du détecteur (21).

16. Véhicule selon l'une quelconque des revendications précédentes, **caractérisé en ce qu'**une position de détection au sol peut être détectée à l'aide d'un capteur, le capteur étant relié à un dispositif de commande qui empêche lors de la détection de la position de détection au sol un démarrage du véhicule (4).
